# EUROPEAN PATENT APPLICATION

(11) **EP 4 663 979 A1**
(43) Date of publication of application: **17.12.2025**
(21) Application number: 23920949.7
(22) Date of filing: 29.12.2023
(51) Int. Cl.: F16H 61/12

(54) **GEAR-SHIFTING CONTROL METHOD, VEHICLE CONTROLLER, AND HYBRID VEHICLE**

(30) Priority: 06.02.2023 CN 202310100202
(71) Applicant: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd, Ningbo, Zhejiang 315800 (CN)
(72) Inventor: JING, Junchao, Hangzhou, Zhejiang 310051 (CN); LIU, Yiqiang, Hangzhou, Zhejiang 310051 (CN); LI, Qi, Hangzhou, Zhejiang 310051 (CN); HUANG, Weishan, Hangzhou, Zhejiang 310051 (CN)
(74) Representative: Murgitroyd & Company
(86) International application number: PCT/CN2023/143022
(87) International publication number: WO 2024/164760

(57) **Abstract**

The present invention relates to a gear-shifting control method, a vehicle controller and a hybrid vehicle. The method comprises: determining whether a clutch is overheated; when the clutch is overheated, performing torque unloading, and making a request for transmission gear-shifting; and performing speed regulation on a first electric motor until the speed regulation is completed. By means of the method, in a gear-shifting speed regulation stage, transmission gear-shifting can be performed when a clutch is overheated, such that the safety and performance of a gear-shifting process can be improved.

## Description

### Technical Field

The present invention relates to, but is not limited to, vehicle gear-shifting technology, and more particularly, to a gear-shifting control method, a vehicle controller, and a hybrid vehicle.

### Background Art

When a vehicle is traveling, gear-shifting which can be achieved by simultaneously controlling disengagement of an offgoing clutch and engagement of an oncoming clutch is needed. The performance of the gear-shifting control has a significant impact on drivability, however, the performance of the current gear-shifting process remains to be improved.

### Summary of the Invention

The following is a summary of a subject matter described in detail herein. This summary is not intended to limit the protection scope of the claims.

The present invention provides a gear-shifting control method applied to a hybrid vehicle including a transmission in multiple gears, a first electric motor, and a clutch, and the method includes:
determining whether the clutch is overheated;
when the clutch is overheated, performing torque unloading, and making a request for transmission gear-shifting; and
performing speed regulation on a first electric motor until the speed regulation is completed.

The present invention further provides a vehicle controller, where the vehicle controller is applied to a hybrid vehicle and includes a processor and a memory storing a computer program, where the processor, when executing the computer program, is capable of implementing the gear-shifting control method according to any one of the embodiments of the present invention.

The present invention further provides a hybrid vehicle including a vehicle controller according to any one of the embodiments of the present invention.

The present invention further provides a non-transitory computer-readable storage medium, where the computer-readable storage medium has stored thereon a computer program, and the computer program, when executed by a processor, is capable of performing the gear-shifting control method according to any one of the embodiments of the present invention.

According to the gear-shifting control method, apparatus and the like of the present invention, in a gear-shifting speed regulation stage, transmission gear-shifting can be performed when a clutch is overheated, such that the safety and performance of a gear-shifting process can be improved.

Other aspects will become apparent upon reading and understanding the following drawings and detailed description.

### Brief Description of the Drawings

FIG. 1 is a schematic diagram showing a hybrid vehicle in a series mode according to an embodiment of the present invention;
FIG. 2 is a schematic diagram showing a hybrid vehicle in a parallel mode according to an embodiment of the present invention;
FIG. 3 is a schematic diagram showing a hybrid architecture according to an embodiment of the present invention;
FIG. 4 is a flowchart of a control method according to an embodiment of the present invention;
FIG. 5 is a schematic diagram showing a change in oil pressure in a clutch filling control stage according to an embodiment of the present invention; and
FIG. 6 is a hardware configuration diagram showing a gear-shifting control apparatus according to an embodiment of the present invention.

### Detailed Description of the Invention

The embodiments of the present invention will now be described more fully hereinafter referring to the accompanying drawings, in which embodiments of the present invention are shown. It is to be understood that the embodiments described are only a few, but not all embodiments of the present invention. Based on the embodiments of the present invention, all other embodiments obtained by a person skilled in the art without inventive effort fall within the scope of the present invention.

In the description of the present invention, the words "exemplary" or "for example" are used to mean serving as an example, instance, or illustration. Any embodiment described herein as "exemplary" or "for example" is not necessarily to be construed as preferred or advantageous over other embodiments. As used herein, "and/or" is a description of an associated relationship to an associated object, meaning that there may be three relationships, e.g., A and/or B, which may mean: there are three cases of A alone, A and B together, and B alone. In the description of the present invention, "a plurality of" refers to at least two, e.g. two, three, etc. unless specifically and specifically limited otherwise.

It should be noted that directional indicators (such as up, down, left, right, front, rear) in the embodiments of the present invention are merely used to explain relative positional relationships, motion conditions, etc. among components at a particular pose (as shown in the figures), and do not indicate or imply that the structure referred to has a particular orientation, is constructed and operated at a particular orientation, and if the particular pose changes, the directional indicator changes accordingly. Therefore, it is not to be construed as limiting the present invention. In addition, the descriptions of "first", "second" and the like in the embodiments of the present disclosure are used for the purpose of description only, and cannot be construed as indicating or implying their relative importance or implicitly indicating the number of technical features indicated. Thus, the features defined by "first" and "second" may explicitly or implicitly include at least one of the features.

In the present invention, unless expressly specified or limited otherwise, the terms "connected", "secured", etc. are to be construed broadly, e.g., "secured" may be fixedly connected or detachably connected, or integrated; may be a mechanical connection or an electrical connection; it may be indirectly coupled through an intermediate medium, and may be the communication between two elements or the interaction relationship between two elements, unless explicitly defined otherwise. The specific meaning of the above terms in the present invention can be understood by a person skilled in the art according to specific circumstances.

The technical solutions between the various embodiments of the present invention can be combined with each other, but it is realized by a person skilled in the art, and when the combination of technical solutions appears contradictory or cannot be realized, it should be considered that the combination of technical solutions does not exist and is not within the scope of protection of the present invention.

With the increasingly stringent requirements for fuel consumption and emissions, as well as the development of electrification systems, a hybrid power technology is the key to achieve energy conservation and emission reduction. In order to meet the emission requirements, vehicle factories and component suppliers are looking for solutions. At present, the battery technology of pure electric vehicle technology system is complex and high in cost, so the hybrid system is widely promoted.

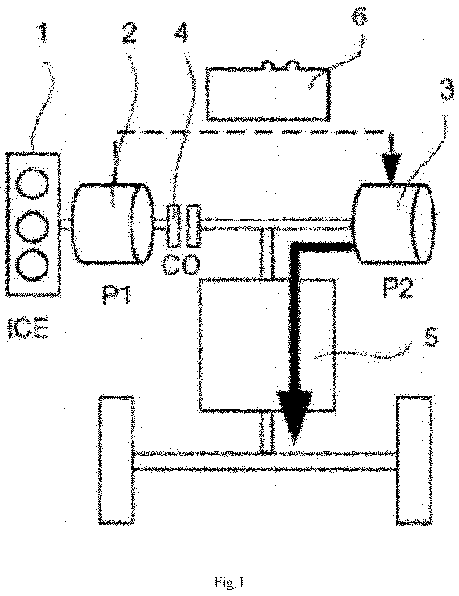

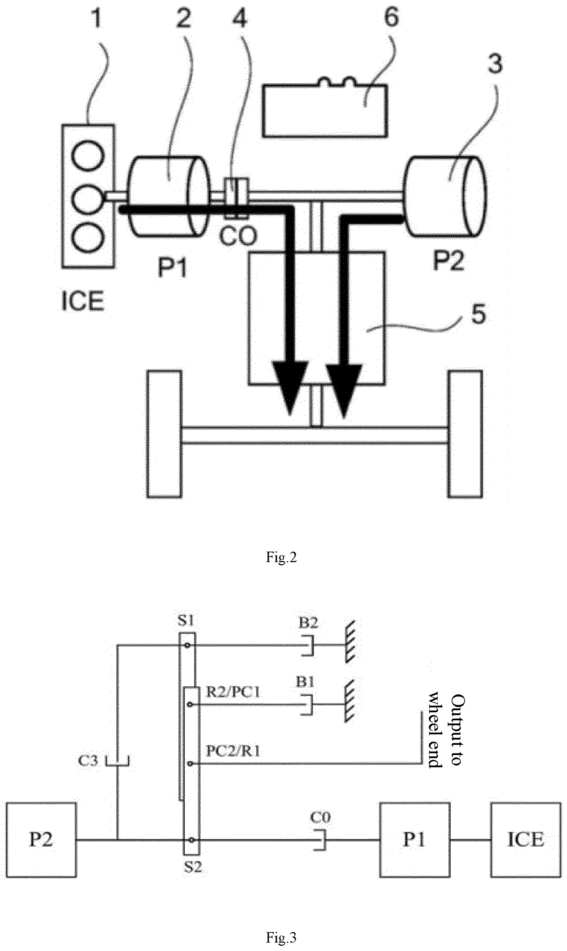

The gear-shifting control method of the embodiment of the present invention is applicable to a hybrid vehicle. There are three modes for a dual electric motor hybrid system: a pure electric mode, a series mode and a parallel mode, among which the hybrid vehicle is switchable. As shown in FIGS. 1 and 2, the hybrid vehicle includes a first power mechanism and a second power mechanism, where the first power mechanism includes an engine 1 (indicated by ICE in the figure) and a second electric motor 2 (indicated by P1 in the figure, and the second electric motor can be used for generating electricity to charge a battery, driving the electric motor to start, etc.) which are connected, and the second power mechanism includes a first electric motor 3 (indicated by P2 in the figure, and the first electric motor 3 can also be referred to as a drive electric motor), and a clutch 4 (indicated by C0 in the figure) for mode switching is connected between the first electric motor 3 and the second electric motor 2. FIG. 1 is a schematic diagram showing a driving manner of a hybrid vehicle in a series mode in which a clutch 4 is in a disengaged state and an engine 1 powers a battery 6 and a first electric motor 3 via a second electric motor 2, the first electric motor 3 driving wheels via a transmission 5; FIG. 2 is a schematic diagram showing the driving manner of the hybrid vehicle in the parallel mode. In the parallel mode, the clutch 4 is in an engaged state (which may also be referred to as a coupled state), and the engine 1 and the first electric motor 3 together drive the wheels through the transmission 5.

The gear-shifting control method of the embodiment of the present invention is applicable to the hybrid architecture as shown in FIG. 3. As shown, the hybrid architecture includes a first power mechanism, a second power mechanism, and a transmission architecture. The first power mechanism includes an engine ICE and a second electric motor P1 connected thereto, and the second power mechanism includes a first electric motor P2. The transmission mechanism includes a fourth clutch C0 available for mode switching, a double-row planetary gear, a first clutch B1, a second clutch B2, and a third clutch C3 available for gear-shifting control. The double-row planetary gear includes a first planetary gear composed of a first sun gear S1, a first carrier PC1, and a first ring gear R1, and a second planetary gear composed of a second sun gear S2, a second carrier PC2, and a second ring gear R2.

As shown, the output shaft of the second electric motor P1 may be connected to the second sun gear S2 via a fourth clutch C0 to drive the second sun gear S2. An output shaft of the first electric motor P2 is connected to the second sun gear S2 to drive the second sun gear S2. The output shaft of the first electric motor P2 may also be connected to the first sun gear S1 via a third clutch C3 to drive the first sun gear S1. The second clutch B2 has one end connected to the first sun gear S1 and the other end connected to a hydraulic system. The first carrier PC1 is connected to the second ring gear R2, the first clutch B1 has one end connected to both the first carrier PC1 and the second ring gear R2 and has the other end connected to the hydraulic system. The first ring gear R1 is connected to the second carrier PC2. The power input to the double-row planetary gears is transmitted from the output shaft to which the first ring gear R1 and the second carrier PC2 are connected to a wheel end.

The hybrid architecture described above can switch among 3 gears of the forward gears, and among the first clutch B1, the second clutch B2, and the third clutch C3, only the first clutch B1 is in the first gear, only the second clutch B2 is in the second gear, and only the third clutch C3 is in the third gear. Switching among the gears may be accomplished by disengaging one of the clutches (i.e., the offgoing clutch) and engaging the other clutch (i.e., the oncoming clutch). The offgoing clutch may also be referred to as an active clutch and the oncoming clutch may also be referred to as a passive clutch. After the change of state of the offgoing clutch and the oncoming clutch, the change of the power transmission path causes the gear ratio to change, thereby achieving gear-shifting.

Although a hybrid architecture to which the embodiments of the present invention are applicable has been shown above, the gear-shifting control method of the embodiments of the present invention is not limited to a particular hybrid architecture.

At present, when the clutch is overheated, it cannot respond quickly, resulting in a safety hazard.

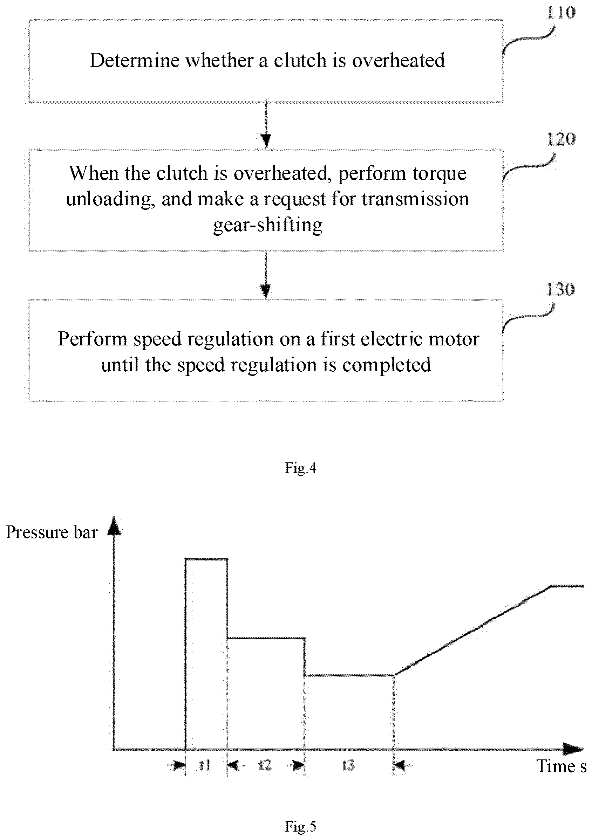

An embodiment of the present invention provides a gear-shifting control method applied to a hybrid vehicle including a transmission in multiple gears, a first electric motor, and a clutch, as shown in FIG. 4, the method includes the following steps.

Step 110 Determine whether a clutch is overheated;

Step 120 When the clutch is overheated, perform torque unloading, and make a request for transmission gear-shifting; and

Step 130 Perform speed regulation on a first electric motor until the speed regulation is completed.

In the gear-shifting control method according to this embodiment, in a case where the clutch is overheated in the gear-shifting speed regulation stage, the transmission gear-shifting is rapidly performed and the torque is unloaded, so that the safety and performance of the vehicle can be improved. The transmission in multiple gears may be an electrically controlled mechanical automatic transmission (AMT).

In an exemplary embodiment of the present invention, the determining whether the clutch is overheated includes:
an elevated temperature of the clutch is obtained according to an actual torque of the clutch, a sliding wear rotational speed of the clutch and a conversion coefficient;
a decreased temperature of the clutch is obtained according to a clutch cooling oil flow rate and a cooling oil temperature based on a compensation coefficient of clutch sliding wear and the conversion coefficient;
the decreased temperature is subtracted from a sum of the elevated temperature and the clutch temperature at a previous timing to obtain a clutch temperature at a current timing; and
the clutch being overheated is determined when the clutch temperature at the current timing exceeds a preset temperature threshold.
The conversion coefficient can be measured on a bench.

By determining whether or not the clutch is overheated in the above manner, it is possible to effectively predict overheating of the clutch according to the change in the clutch temperature, so that the gear-shifting can be performed in rapid response.

In an example of this embodiment, the elevated temperature is obtained by the following formula:
elevated temperature = actual torque of the clutch * sliding wear rotational speed of the clutch * conversion coefficient;
the decreased temperature is obtained by the following formula:
decreased temperature = clutch cooling oil flow rate * (clutch temperature at the previous timing - cooling oil temperature) * compensation coefficient based on clutch sliding wear * conversion coefficient;
where "*" represents multiplication.

In an exemplary embodiment of the present invention, the when the clutch is overheated, performing torque unloading, and making the request for transmission gear-shifting includes:
the clutch is opened to reduce a current wheel end torque to 0 at a set slope; and
a target gear is acquired and a transmission gear-shifting is made a request for, the gear-shifting type being a torque interrupt.

The target gear may be transmitted by an engine control unit ECM via a Controller Area Network (CAN) bus.

In an exemplary embodiment of the present invention, it is also necessary to disable the current gear after the clutch has been overheated.

In an example of this embodiment, the performing speed regulation on a first electric motor includes:
an output shaft rotational speed is acquired, a product of the output shaft rotational speed and a speed ratio of the target gear is taken as a target rotational speed, and the target rotational speed is derived to obtain a target rotational speed slope;
an actual rotational speed of the first electric motor is acquired, and a difference between the actual rotational speed and the target rotational speed is taken as a rotational speed difference; and
a target PID parameter value is obtained according to the rotational speed difference and the slope of the target rotational speed, and the first electric motor is controlled via the PID to perform speed regulation.

In an example of this embodiment, the speed regulation completion means that an absolute value of the actual rotational speed and the target rotational speed of the first electric motor is less than a time threshold; or a speed regulated time length has reached a maximum allowable speed regulation time length.

In an example of this embodiment, the time threshold is set according to an accelerator, and the greater the accelerator operates, the smaller the time threshold, so that the gear-shifting process can be completed quickly and the user experience can be improved in response to the user's operation.

In an exemplary embodiment of the present invention, the method further includes:
the clutch is performed clutch filling control while the first electric motor is performed speed regulation.

In an example of this embodiment, the performing clutch filling control on the clutch includes:
clutch filling control is performed in three stages, and clutch filling is performed on an oncoming clutch at a first oil pressure, a second oil pressure, and a third oil pressure in the first stage, the second stage, and the third stage, respectively, where the third oil pressure is equal to a half engagement point pressure of the oncoming clutch, and the second oil pressure is greater than the third oil pressure and less than the first oil pressure.

**In** an example of this embodiment, the method further includes:
a difference of subtracting the first oil pressure from the second oil pressure is greater than a difference of subtracting the second oil pressure from the third oil pressure, and/or a duration of the first stage is less than that of the second stage and the third stage respectively.

Before the oncoming clutch is engaged, there is a certain gap between the driving part (e.g., the driving disk) and the driven part (e.g., the driven disk) of the clutch, and in the clutch filling stage, clutch filling control is performed on the oncoming clutch to quickly eliminate the gap, so that the oncoming clutch can reach a transfer torque state in a short time. The speed of clutch filling and the pressure following the clutch filling have an important influence on drivability and dynamic response during gear-shifting.

FIG. 5 shows a pressure control curve (i.e., a clutch filling strategy curve) of an oncoming clutch of this embodiment, and as shown, the clutch filling control process of this embodiment sequentially includes the following three stages:

The first stage, which may be referred to as a high-pressure clutch filling stage, corresponds to a time period t1 in FIG. 5. As shown, in the high-pressure clutch filling stage, a higher first oil pressure is used to fill the clutch to activate a solenoid valve to increase a pressure response of the actual clutch, the duration of the high-pressure clutch filling stage being shorter than those of the other two stages. The clutch filling pressure (first oil pressure) and clutch filling time used in the high-pressure clutch filling stage are related to the oil temperature, and can be determined according to the current oil temperature and calibrated clutch filling pressure and clutch filling time at different oil temperatures. The clutch filling pressure and clutch filling time in this stage of calibration at different oil temperatures can be determined according to the test results.

The second stage (may be referred to as a medium pressure clutch filling stage) corresponds to time period t2 in FIG. 5. As shown, in the medium pressure clutch filling stage, the clutch is filled at a second oil pressure, allowing the oil to flow into an oil path of the clutch. The second oil pressure is lower than the first oil pressure and slightly higher than the pressure at a half engagement point (i.e., a KP point) of the clutch, and a difference of subtracting the first oil pressure from the second oil pressure is greater than a difference of subtracting the second oil pressure from the third oil pressure, so that the clutch filling pressure of the clutch approaches the KP point pressure as soon as possible. The clutch filling pressure and clutch filling time of medium pressure clutch filling stage are related to oil temperature, which can be determined according to the clutch filling pressure and clutch filling time of this stage calibrated at current oil temperature and different oil temperature.

The third stage (may be referred to as the low-pressure clutch filling stage) corresponds to time period t3 in FIG. 5. As shown, in the low-pressure clutch filling stage, clutch filling is performed on the clutch at a third oil pressure, which is equal to the KP point pressure, so that the clutch pressure reaches the KP point, preventing over-clutch filling. The KP point pressure was different among different samples at different ambient temperatures. During the pre-clutch filling calibration, a single sample can be tested and calibrated according to the test results, and then the KP point pressure of the clutch can be determined by self-learning.

Each of the above stages may generate a corresponding oil pressure request by the transmission control unit or another control unit issuing a corresponding oil pressure request to the hydraulic control system supplying oil to the clutch.

In this embodiment, the clutch filling stage is divided into three stages: high-pressure clutch filling, medium pressure clutch filling and low-pressure clutch filling. Firstly, high-pressure clutch filling is used to improve the pressure response of the clutch. Secondly, medium pressure clutch filling is used to make the clutch filling pressure of the clutch approach the KP point as soon as possible. Finally, low-pressure clutch filling is used to make the pressure of the clutch reach the KP point. The clutch filling process of this embodiment is quick and smooth, over-clutch filling can be prevented, torque transmission at the initial stage of the gear-shifting is facilitated to be smooth, without frustration, and the gear-shifting process can be completed quickly.

Oil pressure control is still required during the torque exchange stage and the speed regulation stage of the gear-shifting process, as shown by a clutch filling curve after timing t3 in FIG. 5. By controlling the oil pressure at each stage of the gear-shifting process, the oncoming clutch can be smoothly engaged and pressed until locked. Rapid disengagement and release of the offgoing clutch ensures power stability during the gear-shifting.

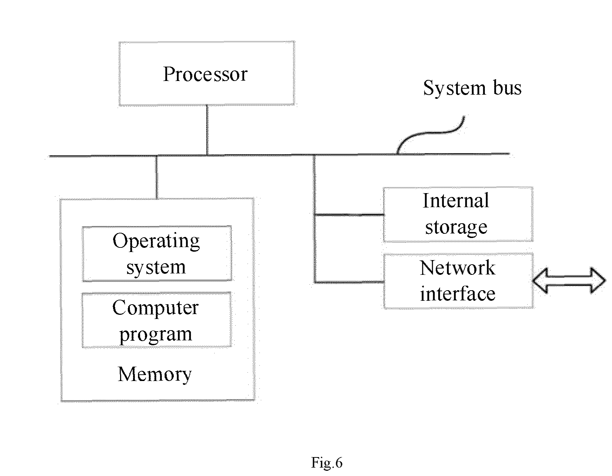

The embodiments of the present invention further provide a vehicle controller applied to a hybrid vehicle, as shown in FIG. 6, including a processor and a memory storing a computer program, where the processor, when executing the computer program, can implement the gear-shifting control method improved for the gear-shifting speed regulation stage according to any one of the embodiments of the present invention, and may further include an internal storage, a network interface, etc. The vehicle controller may include a transmission control module, a complete machine control module, etc. and the present invention is not limited thereto.

An embodiment of the present invention further provides a hybrid vehicle including the vehicle controller applied to the hybrid vehicle described in the above embodiment.

An embodiment of the present invention further provides a non-transitory computer-readable storage medium having stored thereon a computer program which, when executed by a processor, is capable of implementing the gear-shifting control method for the gear-shifting speed regulation stage of any one of the embodiments of the present invention.

The processor of the above-mentioned embodiments of the present invention can be a general-purpose processor, including a Central Processing Unit (CPU), a Network Processor (NP), a microprocessor, etc. and can also be other conventional processors, etc.; the processor may also be a Digital Signal Processor (DSP), an Application Specific Integrated Circuit (ASIC), a Field Programmable Gate Array (FPGA), discrete logic or other programmable logic devices, discrete gate or transistor logic devices, discrete hardware components, or other equivalent integrated or discrete logic circuitry, or a combination thereof. That is, the processors of the embodiments described above may be any processing device or combination of devices that implement the methods, steps and logic blocks of the embodiments of the present invention. If the embodiments of the present invention are implemented in part in software, the instructions for the software may be stored in a suitable non-volatile computer-readable storage medium and executed in hardware using one or more processors to perform the methods of the embodiments of the present invention. The term "processor" as used herein may refer to the structures described above or any other structure suitable for implementing the techniques described herein.

In one or more of the above exemplary embodiments, the functions described may be implemented in hardware, software, firmware, or any combination thereof. If implemented in software, the functions may be stored on or transmitted over as one or more instructions or code on a computer-readable medium and executed by a hardware-based processing unit. The computer-readable medium can include computer-readable storage medium corresponding to tangible media, such as data storage medium, or communication media including any medium that facilitates transfer of a computer program from one place to another, such as under a communication protocol. In this manner, the computer-readable medium can generally correspond to a non-transitory tangible computer-readable storage medium or a communication medium such as a signal or carrier wave. The data storage medium may be any available medium that may be accessed by one or more computers or one or more processors to retrieve instructions, code, and/or data structures for implementing the techniques described in the present invention. The computer program product may include a computer-readable medium.

By way of example but not limitation, such computer-readable storage medium can include RAM, ROM, EEPROM, CD-ROM or other optical disk storage, magnetic disk storage or other magnetic storage devices, flash memory or any other medium that can be used to store desired program code in the form of instructions or data structures and that can be accessed by a computer. In addition, any connection is referred to as a computer-readable medium. For example, if the instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in a definition of medium. However, it should be understood that a computer-readable storage medium and a data storage medium do not include a connection, carrier wave, signal, or other transient (transitory) medium, but are instead directed to a non-transient tangible storage medium. A magnetic disk and an optical disk, as used herein, each includes a compact disk (CD), a laser disk, an optical disk, a digital versatile disk (DVD), a floppy disk, or a Blu-ray disk where disks usually reproduce data magnetically, while disks reproduce data optically with lasers. Combinations of the above should also be included within scope of the computer-readable medium. Although the embodiments of the present invention have been described above, the description is merely an embodiment to facilitate an understanding of the present invention and is not intended to limit the present invention. It will be understood by a person skilled in the art that various changes in form and details may be made therein without departing from the spirit and scope of the present invention as defined by the appended claims.

## Claims

1. A gear-shifting control method, **characterized in that** the method is applied to a hybrid vehicle comprising a transmission in multiple gears, a first electric motor, and a clutch, and the method comprises:
determining whether the clutch is overheated;
when the clutch is overheated, performing torque unloading, and making a request for transmission gear-shifting; and
performing speed regulation on a first electric motor until the speed regulation is completed.

2. The method according to claim 1, **characterized in that**:
the determining whether the clutch is overheated comprises:
obtaining an elevated temperature of the clutch according to an actual torque of the clutch, a sliding wear rotational speed of the clutch and a conversion coefficient;
obtaining a decreased temperature of the clutch according to a clutch cooling oil flow rate and a cooling oil temperature based on a compensation coefficient of clutch sliding wear and the conversion coefficient;
subtracting the decreased temperature from a sum of the elevated temperature and the clutch temperature at a previous timing to obtain a clutch temperature at a current timing; and
determining that the clutch is overheated when the clutch temperature at the current timing exceeds a preset temperature threshold.

3. The method according to claim 2, **characterized in that**:
the elevated temperature is obtained by the following formula:
elevated temperature = actual torque of the clutch * sliding wear rotational speed of the clutch * conversion coefficient;
the decreased temperature is obtained by the following formula: decreased temperature = clutch cooling oil flow rate * (clutch temperature at the previous timing - cooling oil temperature) * compensation coefficient based on clutch sliding wear * conversion coefficient;
wherein "*" represents multiplication.

4. The method according to claim 1, **characterized in that**:
the performing torque unloading, and making the request for transmission gear-shifting comprises:
opening the clutch to reduce a current wheel end torque to 0 at a set slope; and
acquiring a target gear and making a request for a transmission gear-shifting, the gear-shifting type being a torque interrupt.

5. The method according to claim 4, **characterized in that**:
the performing speed regulation on a first electric motor comprises:
acquiring an output shaft rotational speed, taking a product of the output shaft rotational speed and
a speed ratio of the target gear as a target rotational speed, and deriving the target rotational speed to obtain a target rotational speed slope;
acquiring an actual rotational speed of the first electric motor, and taking a difference between the actual rotational speed and the target rotational speed as a rotational speed difference; and
obtaining a target PID parameter value according to the rotational speed difference and the slope of the target rotational speed, and controlling the first electric motor via the PID to perform speed regulation.

6. The method according to claim 5, **characterized in that**:
the speed regulation completion means that an absolute value of the actual rotational speed and the target rotational speed of the first electric motor is less than a time threshold; or a speed regulated time length has reached a maximum allowable speed regulation time length.

7. The method according to claim 6, **characterized in that**:
the time threshold is set according to an accelerator, and the greater the accelerator operates, the smaller the time threshold.

8. The method according to claim 1, **characterized in that**:
the method further comprises:
performing clutch filling control on the clutch while performing speed regulation on the first electric motor.

9. The method according to claim 8, **characterized in that**:
the performing clutch filling control on the clutch comprises:
performing clutch filling control in three stages, and performing clutch filling on an oncoming clutch at a first oil pressure, a second oil pressure, and a third oil pressure in the first stage, the second stage, and the third stage, respectively, wherein the third oil pressure is equal to a half engagement point pressure of the oncoming clutch, and the second oil pressure is greater than the third oil pressure and less than the first oil pressure.

10. The method according to claim 9, **characterized in that**
the method further comprises: a difference of subtracting the first oil pressure from the second oil pressure is greater than a difference of subtracting the second oil pressure from the third oil pressure, and/or a duration of the first stage is less than that of the second stage and the third stage respectively.

11. A vehicle controller, **characterized in that** the vehicle controller is applied to a hybrid vehicle and comprises a processor and a memory storing a computer program, wherein the processor, when executing the computer program, is capable of implementing the gear-shifting control method according to any one of claims 1 to 10.

12. A hybrid vehicle, **characterized by** comprising the vehicle controller according to claim 11.

13. A non-transitory computer-readable storage medium, **characterized in that** the computer-readable storage medium has stored thereon a computer program, and the computer program, when executed by a processor, is capable of performing the gear-shifting control method according to any one of claims 1 to 10.
